# EUROPÄISCHE PATENTANMELDUNG

(11) **EP 0 901 266 A2**
(43) Veröffentlichungstag der Anmeldung: **10.03.1999**
(21) Anmeldenummer: 98440180.2
(22) Anmeldetag: 21.08.1998
(51) Int. Cl.: H04M 3/42, H04M 7/00, H04Q 3/00

(54) **Kompatibilitätsserver bei IN-gestützer Rufnummernpotabilität**

(30) Priorität: 06.09.1997 DE 19739016
(71) Anmelder: ALCATEL, 75088 Paris (FR)
(72) Erfinder: Weik, Hartmut, 70195 Stuttgart (DE); Lautenschlager, Wolfgang, 71287 Weissach-Flacht (DE)
(74) Vertreter: Zinsinger, Norbert

(57) **Zusammenfassung**

Ein Verfahren und eine Vorrichtung zum Verbindungsaufbau von einem rufenden A-Teilnehmer zu einem gerufenen B-Teilnehmer in einem Telekommunikations(TK)-Netzwerk mit angebotenen IN(=Intelligent Network)-Diensten, insbesondere in einer Multi-Operator-Umgebung mit IN-gestützter Rufnummernportabilität, ist dadurch gekennzeichnet, daß bei der Ermittlung der Zieladresse des gerufenen B-Teilnehmers simultan ein für den aktuellen Ruf durch den rufenden A-Teilnehmer angeforderter Dienst mit einem abgespeicherten Diensteprofil des gerufenen B-Teilnehmers verglichen und im Falle einer festgestellten Inkompatibilität eine entsprechende negative Auslöser-Mitteilung (release message) an den rufenden A-Teilnehmer übermittelt wird. Dies erlaubt es, dem rufenden A-Teilnehmer, vor Herstellung einer möglicherweise sinnlosen Verbindung mit einem gerufenen B-Teilnehmer, der die vom A-Teilnehmer gewünschten Dienste gar nicht anbietet, die für den rufenden A-Teilnehmer nutzlose Verbindung gar nicht erst herzustellen.

## Beschreibung

Die Erfindung betrifft ein Verfahren und eine Vorrichtung zum Verbindungsaufbau von einem rufenden A-Teilnehmer zu einem gerufenen B-Teilnehmer in einem Telekommunikations(TK)-Netzwerk mit angebotenen IN(=Intelligent Network)-Diensten, insbesondere in einer Multi-Operator-Umgebung mit IN-gestützter Rufnummernportabilität.

Ein derartiges Verbindungsaufbauverfahren sowie eine entsprechende Vorrichtung sind bekannt aus der DE 195 15 856 A1.

Um eine Verbindung zwischen einem rufenden und einem gerufenen Teilnehmer in einem TK-Netzwerk aufzubauen, wählt zunächst der rufende A-Teilnehmer eine dem gerufenen B-Teilnehmer zugeordnete Rufnummer an. Diese Rufnummer wird im Ruf mitgeführt und dient den Vermittlungsstellen zur Lokalisierung des gerufenen Teilnehmers.

Seit einiger Zeit werden in TK-Netzwerken IN-Dienste (IN = Intelligent Network) angeboten, wie beispielsweise Servicedienstleistungen, die mit Rufnummern mit bestimmten (der Rufnummer vorangestellten) Dienstekennzahlen von rufenden Netzteilnehmern angefordert werden können. Den Zugang zu einem IN-Dienst im TK-Netzwerk ermöglicht eine Vielzahl von Dienstvermittlungspunkten (SSP = Service Switching Point), die jeweils mit einer zentralen Steuerlogik, dem Dienststeuerpunkt (SCP = Service Control Point) kommunizieren. Der durch die Anwahl einer Nummer vom A-Teilnehmer ausgelöste Ruf wird zum nächsten Dienstvermittlungspunkt geleitet, der aus der Nummer, welche aus einer Dienstekennzahl und einer umzuwertenden Rufnummer besteht, die letztere dem Ruf entnimmt und sie an den übergeordneten Dienststeuerpunkt sendet. Anschließend empfängt der Dienstvermittlungspunkt vom Dienststeuerpunkt die umgewertete Rufnummer mit entsprechender Routing Information, so daß der Ruf an diese Rufnummer weitergeleitet werden kann.

In der DE 195 21 901 A1 ist ein Kommunikationssystem zur sprachgesteuerten Aktivierung von Diensten mit einer Vermittlungsstelle zur bequemeren Anwahl eines gerufenen B-Teilnehmers beschrieben, wobei an die Vermittlungsstelle mehrere Teilnehmerstationen sowie ein Server mit Spracherkennungseinrichtung und Steuermittel zur Veranlassung der Aktivierung der Dienste angeschlossen sind.

Die eingangs zitierte DE 195 15 856 A1 beschreibt ein Verbindungsaufbauverfahren mit UPT(= Universal Personal Telecommunication)-Merkmalen und automatischer Weiterleitung an den gerufenen B-Teilnehmer unter einer Rufnummer, unter der er gerade aktuell erreichbar ist.

Für einen gerufenen A-Teilnehmer, der einen bestimmten, im TK-Netzwerk angebotenen Dienst anfordern möchte, besteht jedoch das Problem, daß er möglicherweise erst nach Abschluß des Verbindungsaufbaus bei hergestellter Verbindung zum gerufenen B-Teilnehmer feststellt, daß der letztere den angeforderten Dienst gar nicht anbietet. Insbesondere in einer Multi-Operator-Umgebung mit Rufnummernportabilität wird sich bei einer abzusehenden wachsenden Anzahl von privaten Tk-Netzen das Problem in Zukunft noch erheblich erhöhen, da der anfordernde A-Teilnehmer sich einer immer größeren Anzahl von diensteanbietenden B-Teilnehmern gegenüber sieht, deren individuelle Angebote er im einzelnen nicht mehr immer überblicken wird.

Aufgabe der vorliegenden Erfindung ist es daher, ein Verfahren und eine Vorrichtung zum Verbindungsaufbau mit den eingangs genannten Merkmalen vorzustellen, die es dem rufenden A-Teilnehmer erlauben, vor Herstellung einer möglicherweise sinnlosen Verbindung mit einem gerufenen B-Teilnehmer, der die vom A-Teilnehmer gewünschten Dienste gar nicht anbietet, die für den rufenden A-Teilnehmer nutzlose Verbindung gar nicht erst herzustellen.

Erfindungsgemäß wird diese Aufgabe dadurch gelöst, daß bei der Ermittlung der Zieladresse des gerufenen B-Teilnehmers simultan ein für den aktuellen Ruf durch den rufenden A-Teilnehmer angeforderter Dienst mit einem abgespeicherten Diensteprofil des gerufenen B-Teilnehmers verglichen und im Falle einer festgestellten Inkompatibilität eine entsprechende negative Auslöser-Mitteilung (release message) an den rufenden A-Teilnehmer übermittelt wird. Da das TK-Netz während des Rufaufbaus eine mögliche Inkompatibilität sofort erkennt und dem rufenden A-Teilnehmer mitteilt kann dieser eine sinnlose Verbindung von vornherein abblocken.

Vorzugsweise kann der Abbruch des Verbindungsaufbaus bei mangelnder Kompatibilität auch automatisch vom TK-Netzwerk aus erfolgen.

Vorteilhaft ist es auch, wenn das TK-Netzwerk ein Eigenschaftsprofil sowohl des rufenden A-Teilnehmers als auch der möglichen gerufenen B-Teilnehmer vorhält, so daß während des Verbindungsaufbaus durch Vergleich der entsprechenden Eigenschaftsprofile festgestellt werden kann, ob außer dem Diensteprofil des gerufenen B-Teilnehmers nicht auch andere Gründe gegen die Vollendung des Aufbaus einer Verbindung sprechen könnten. Ein solches Eigenschaftsprofil kann beispielsweise Angaben enthalten wie etwa, daß nur Fax-, Modem-oder Fernsprechverbindungen aufgebaut werden sollen. Vorzugsweise sind die Eigenschaftsprofile der Teilnehmer in der jeweils zuständigen Teilnehmervermittlungsstelle, über die der Teilnehmer Zugang zum TK-Netzwerk erhält, abgespeichert.

Falls das System feststellt, daß bestimmte Eigenschaften der Eigenschaftsprofile vom rufenden A-Teilnehmer und gerufenem B-Teilnehmer kompatibel sind, kann es auch automatisch einen dem entsprechenden Eigenschaftsprofil des A-Teilnehmers angepaßten Pfad, beispielsweise den Aufbau einer ausschließlich gewünschten Fax-Verbindung wählen.

In den Rahmen der Erfindung fällt auch eine Vorrichtung zur Durchführung des erfindungsgemäßen Verfahrens, die sich dadurch auszeichnet, daß in einem TK-Netzwerk eine Vielzahl von Teilnehmervermittlungsstellen vorgesehen sind, die insbesondere auch Dienstvermittlungspunkte sein können und über die die Teilnehmer Zugang zum Netz erlangen können, daß mindestens ein übergeordneter Dienststeuerpunkt in Form eines Servers vorgesehen ist, über den eine Verbindungs zwischen einem rufenden A-Teilnehmer und einem gerufenen B-Teilnehmer über den jeweils zuständigen Dienstvermittlungspunkt aufgebaut wird, und daß im Dienststeuerpunkt ein Dienstprofil des gerufenen B-Teilnehmers, das in dessen zuständiger Teilnehmervermittlungsstelle oder dem zuständigen Dienstvermittlungspunkt oder im Dienststeuerpunkt selbst abgespeichert ist, mittels einer logischen Schaltung auf Kompatibilität mit dem vom rufenden A-Teilnehmer angeforderten Dienst verglichen werden kann.

Vorzugsweise ist in der zuständigen Teilnehmervermittlungsstelle oder im zuständigen Dienstvermittlungspunkt oder im Dienststeuerpunkt auch ein Eigenschaftsprofil des jeweiligen TK-Teilnehmers abgespeichert. Im Dienststeuerpunkt kann dann beim Vermittlungsaufbau mittels einer geeigneten logischen Schaltung das Eigenschaftsprofil des jeweils rufenden A-Teilnehmers mit dem des gerufenen B-Teilnehmers verglichen werden und ein entsprechender Verbindungspfad gewählt oder der Verbindungsaufbau automatisch abgebrochen werden.

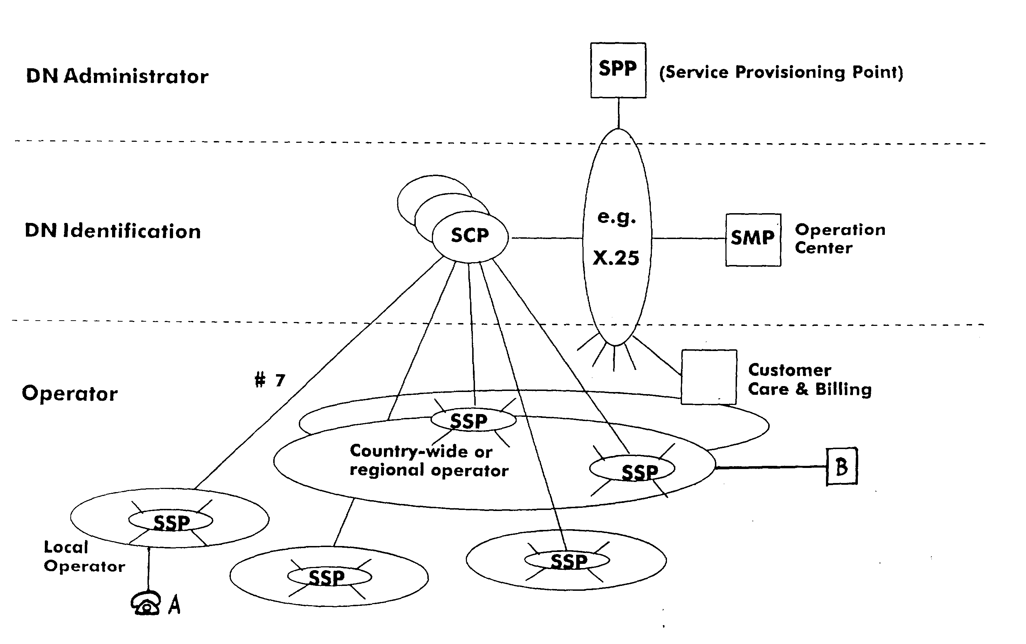

Weitere Vorteile der Erfindung ergeben sich aus der Beschreibung und der Zeichnung. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Die Erfindung ist in der Zeichnung dargestellt und wird anhand eines Ausführungsbeispiels näher erläutert.

Die Figur zeigt den prinzipiellen Aufbau eines Telekommunikations(TK)-Netzwerks, auf dem IN-Dienste angeboten werden können, wobei ein Dienststeuerpunkt (SCP = Service Control Point) als Kompatibilitätsserver dient.

Ein rufender A-Teilnehmer im Bereich eines Local Operator erhält über eine Teilnehmervermittlungsstelle oder über einen Dienstvermittlungspunkt (SSP = Service Switching Point) Zugang zum TK-Netz durch Anwählen einer Nummer. Daraufhin sendet der SSP an einen übergeordneten SCP eine IN-Anfrage in der neben der eigentlichen Rufnummer des vom A-Teilnehmer gerufenen B-Teilnehmers als Parameter verschlüsselt jetzt auch erfindungsgemäß ein Signal mitübertragen wird, das charakteristisch für den vom A-Teilnehmer angeforderten Dienst ist. Im SCP wird neben der üblichen Routing Information nun auch ein Diensteprofil des B-Teilnehmers vorgehalten, das entweder im SCP selbst abgespeichert ist oder das sich der SCP vom zuständigen SSP des gerufenen B-Teilnehmers holt.

Anhand des für den angeforderten Dienst charakteristischen Signals wird nun ein Kompatibilitätsvergleich mit dem Diensteprofil des gerufenen B-Teilnehmers angestellt. Falls keine Kompatibilität besteht, also der gerufene B-Teilnehmer den angeforderten Dienst gar nicht unterstützt, wird dem A-Teilnehmer über seinen zuständigen SSP eine negative Auslöser-Mitteilung (release message) übermittelt. Der Verbindungsaufbau kann nun entweder automatisch oder durch Entscheidung des A-Teilnehmers vor Herstellung einer Verbindung zum B-Teilnehmer abgebrochen werden. Im Falle eines automatischen Abbruchs des Verbindungsaufbaus kann dem rufenden A-Teilnehmer eine entsprechende Anzeige übermittelt werden. Dadurch können sinnlose Verbindungen von vornherein abgeblockt werden.

Vorteilhafterweise kann in der zuständigen Teilnehmervermittlungsstelle, im zuständigen SSP oder im übergeordneten SCP auch jeweils ein erweitertes Eigenschaftenprofil des jeweiligen Teilnehmer abgespeichert sein, welches beispielsweise als Anweisung enthalten kann, daß nur Fax-, Modem-bzw. Fernsprechverbindungen hergestellt werden sollen. Beim Verbindungsaufbau kann dann das Eigenschaftsprofil des rufenden A-Teilnehmers mit dem des gerufenen B-Teilnehmers verglichen werden. Falls keine Kompatibilität möglich ist, kann ebenfalls eine negative release message an den rufenden A-Teilnehmer übermittelt und der Verbindungsaufbau automatisch abgebrochen werden.

## Patentansprüche

1. Verfahren zum Verbindungsaufbau von einem rufenden A-Teilnehmer zu einem gerufenen B-Teilnehmer in einem Telekommunikations(TK)-Netzwerk mit angebotenen IN(=Intelligent Network)-Diensten, insbesondere in einer Multi-Operator-Umgebung mit IN-gestützter Rufnummernportabilität,
dadurch gekennzeichnet,
daß bei der Ermittlung der Zieladresse des gerufenen B-Teilnehmers simultan ein für den aktuellen Ruf durch den rufenden A-Teilnehmer angeforderter Dienst mit einem abgespeicherten Diensteprofil des gerufenen B-Teilnehmers verglichen und im Falle einer festgestellten Inkompatibilität eine entsprechende negative Auslöser-Mitteilung (release message) an den rufenden A-Teilnehmer übermittelt wird.

2. Verfahren nach Anspruch 1, dadurch gekennzeichnet, daß der A-Teilnehmer an einem Dienstvermittlungspunkt (SSP = Service Switching Point) eines Local Operator (LO) die Rufnummer des B-Teilnehmers anwählt, die nicht im Bereich dieses Local Operators (LO) ist,
daß der Dienstvermittlungspunkt (SSP) des A-Teilnehmers eine IN-Anfrage an einen übergeordneten Dienststeuerpunkt (SCP = Service Control Point) sendet, in der als zusätzlicher Parameter ein für den vom A-Teilnehmer angeforderten Dienst charakteristisches Signal mitübertragen wird,
daß im Dienststeuerpunkt (SCP) oder im Dienstevermittlungspunkt (SSP) des gerufenen B-Teilnehmers ein Diensteprofil des B-Teilnehmers abgespeichert ist, mit dem das für den vom A-Teilnehmer angeforderten Dienst charakteristische Signal auf Kompatibilität verglichen wird,
und daß bei mangelnder Kompatibilität dem A-Teilnehmer über den Dienstvermittlungspunkt (SSP) vom Dienststeuerpunkt (SCP) die negative Auslöser-Mitteilung übermittelt wird.

3. Verfahren nach Anspruch 1 oder 2, dadurch gekennzeichnet, daß bei mangelnder Kompatibilität der weitere Verbindungsaufbau zum gerufenen B-Teilnehmer sofort automatisch abgebrochen wird.

4. Verfahren nach einem der vorhergehenden Ansprüche, dadurch gekennzeichnet, daß ein Eigenschaftsprofil des rufenden A-Teilnehmers, beispielsweise eine Angabe, daß nur FAX-, Modem- oder Fernsprechverbindungen aufgebaut werden sollen, abgespeichert ist, vorzugsweise in der Teilnehmervermittlungsstelle, über die der A-Teilnehmer Zugang zum TK-Netzwerk erhält,
daß während des Verbindungsaufbaus das entsprechende Eigenschaftsprofil des gerufenen B-Teilnehmers mit dem des A-Teilnehmers verglichen wird,
und daß bei Inkompatibilität eine negative Auslöser-Mitteilung an den A-Teilnehmer übermittelt wird.

5. Verfahren nach Anspruch 4, dadurch gekennzeichnet, daß im Falle von möglicher Kompatibilität der Eigenschaftsprofile automatisch ein dem Eigenschaftsprofil des A-Teilnehmers entsprechender Pfad, beispielsweise der Aufbau einer FAX-Verbindung, gewählt wird.

6. Vorrichtung zur Durchführung des Verfahrens nach einem der vorhergehenden Ansprüche, dadurch gekennzeichnet, daß in einem TK-Netzwerk eine Vielzahl von Teilnehmervermittlungsstellen, die insbesondere auch Dienstvermittlungspunkte (SSP) sein können vorgesehen ist, über die die Teilnehmer Zugang zum Netz erlangen können, daß mindestens ein übergeordneter Dienststeuerpunkt (SCP) in Form eines Servers vorgesehen ist, über den eine Verbindung zwischen einem rufenden A-Teilnehmer und einem gerufenen B-Teilnehmer über den jeweils zuständigen Dienstvermittlungspunkt (SSP) aufgebaut wird, und daß im Dienststeuerpunkt (SCP) ein Dienstprofil des gerufenen B-Teilnehmers, das in dessen zuständiger Teilnehmervermittlungsstelle oder dem zuständigen Dienstvermittlungspunkt (SSP) oder im Dienststeuerpunkt (SCP) selbst abgespeichert ist, mittels einer logischen Schaltung auf Kompatibilität mit dem vom rufenden A-Teilnehmer angeforderten Dienst verglichen werden kann.

7. Vorrichtung nach Anspruch 6, dadurch gekennzeichnet, daß in der zuständigen Teilnehmervermittlungsstelle oder im zuständigen Dienstvermittlungspunkt (SSP) oder im Dienststeuerpunkt (SCP) ein Eigenschaftsprofil des jeweiligen Teilnehmers abgespeichert ist, und daß im Dienststeuerpunkt beim Verbindungsaufbau mittels einer logischen Schaltung die Eigenschaftsprofile des rufenden A-Teilnehmers und des gerufenen B-Teilnehmers verglichen werden können und ein entsprechender Verbindungspfad gewählt oder der Verbindungsaufbau automatisch abgebrochen werden kann.
